# EUROPÄISCHE PATENTANMELDUNG

(11) **EP 1 201 848 A2**
(43) Veröffentlichungstag der Anmeldung: **02.05.2002**
(21) Anmeldenummer: 01125235.0
(22) Anmeldetag: 24.10.2001
(51) Int. Cl.: E04F 15/20

(54) **Schalldämmende Trägerbahn für Bodenbeläge, insbesondere Plattenbeläge**

(30) Priorität: 24.10.2000 DE 20018150 U; 30.11.2000 DE 20020316 U
(71) Anmelder: Gutjahr, Walter, 64404 Bickenbach (DE)
(72) Erfinder: Gutjahr, Walter, 64404 Bickenbach (DE)
(74) Vertreter: Helber, Friedrich G., Dipl.-Ing.

(57) **Zusammenfassung**

Trägerbahn (10) für auf festen Untergründen zu verlegende Bodenbeläge, insbesondere Plattenbeläge, wie keramischen Fliesen etc. Die Trägerbahn weist eine im Wesentlichen beidseitig ebenflächige Profilbahn (12) auf, von der von wenigstens einer ihrer Flachseiten eine Vielzahl von voneinander beabstandeten Vorsprüngen gleicher Höhe vortreten können. Auf der dem Untergrund abgewandten Fläche der Trägerbahn ist ein den Mörtel oder Kleber für die Fixierung des zu verlegenden Bodenbelags auf der Trägerbahn armierendes Gittergewebe (14) vorgesehen.

Die Profilbahn (12) ist von haftend miteinander verbundenen Partikeln aus elastomere Eigenschaften aufweisendem, trittschalldämmendem Material gebildet, welche vorzugsweise von Partikeln aus Gummi, beispielsweise durch Recycling gewonnenem Gummischrot gebildet werden.
Zwischen den miteinander verbundenen Partikeln aus Gummi sind gas- und/oder wasserdampfdurchlässige durchgehende Spalten bildende unverbundene Bereiche ausgebildet.

## Beschreibung

Die Erfindung betrifft eine Trägerbahn für auf festen Untergründen zu verlegende Bodenbeläge, insbesondere Plattenbeläge, wie keramische Fliesen etc., bestehend aus einer durchgehenden, im wesentlichen beidseitig ebenflächigen Profilbahn, von deren wenigstens einer Flachseite eine Vielzahl von voneinander beabstandeten Vorsprüngen gleicher Höhe vortreten, deren trägerbahnabgewandte freie Endflächen ein den Mörtel oder Kleber für die Fixierung des zu verlegenden Bodenbelags auf der Trägerbahn armierendes Gittergewebe tragen.

Beim Bau und der Sanierung von insbesondere mehrstöckigen Mehrfamilienhäusern ist ein nicht immer zufriedenstellend gelöstes Problem die Trittschalldämmung insbesondere in Räumen mit harten Bodenbelägen, beispielsweise Fliesenbelägen etc., zumal diese in neuerer Zeit nicht mehr nur in Küchen, Badezimmern und anderen Nassräumen relativ geringer Bodenfläche, sondern in zunehmendem Maße auch in Wohnräumen verlegt werden. Um zu vermeiden, dass die beim Begehen solcher harter Böden im Vergleich zu weichen Bodenbelägen, wie Teppichböden etc. entstehenden stärkeren Geräusche über die massiven Decken und Wände in die Tragkonstruktion des Bauwerks als Körperschall übertragen und dann von den Bewohnern benachbarter Wohnungen als Geräuschbelästigung empfunden werden, werden Bodenbeläge zumindest im Wohnbereich heute auf sogenanntem 'schwimmendem' Estrich, d.h. einem durch eine aus Schaum-Kunststoffplatten oder -bahnen bestehenden schalldämmenden Zwischenschicht vom Untergrund akustisch entkoppelten Tragschicht, verlegt. Dabei muss sichergestellt sein, dass diese schalldämmende Zwischenschicht zwischen dem den Fußbodenbelag tragenden Estrich und der darunter liegenden sowie der seitlich anschließenden Tragkonstruktion des Bauwerks in jedem Falle unbeschädigt durchgehend verlegt wird, da bereits kleine durchgehende Beschädigungen, durch welche der in zunächst bildsamem Zustand aufgebrachte Estrich in direkten Kontakt zur Tragkonstruktion kommt, als Schallbrücke wirken, welche die für die Schalldämmung getroffene Maßnahmen zumindest zu einem beträchtlichen Teil unwirksam machen. Die für die schalldämmende Zwischenlage verwendeten Kunststoffmaterialien können aber - bei unachtsamer Verlegung - relativ leicht beschädigt werden. Bei größeren mit harten Belägen, z.B. Fliesen, zu belegenden Bodenflächen tritt außerdem das Problem auf, dass direkt auf dem Estrich durch Fliesenkleber aufgebrachte Fliesenbeläge durch Schwund oder unterschiedliche Wärmedehnungen des Estrichs reißen können. Auch der auf mit Plattenbelägen versehenen Balkons und Terrassen entstehende Trittschall wird - zumindest dann, wenn die Balkon- oder Terrassen-Tragplatte Teil der sich ins Gebäudeinnere fortsetzenden Decke bzw. des Bodens ist - als Körperschall ins Gebäudeinnere übertragen, so dass also auch eine akustische Entkopplung solcher gebäudeaußenseitiger Plattenbeläge von ihrem Untergrund angestrebt werden muss, wobei dann aber zusätzlich ein Problem bezüglich der Drainierung dieser Außenbeläge bei anfallendem Regenwasser entstehen kann.

Der Erfindung liegt demgegenüber die Aufgabe zugrunde, die Verlegung von trittschallgedämmten harten Belägen sowohl im Innenbereich als auch auf Balkonen und Terrassen von Wohnhäusern auf harten, festen und durchbiegungsfreien Untergründen zu ermöglichen, wobei auch die Gefahr eines Reißens des verlegten Belages minimiert werden soll.

Ausgehend von einer Trägerbahn der eingangs erwähnten Art wird diese Aufgabe erfindungsgemäß dadurch gelöst, dass die Profilbahn von haftend miteinander verbundenen Partikeln aus elastomere Eigenschaften ausweisendem, trittschalldämmendem Material gebildet wird.

Die trittschalldämmende Profilbahn wird dann bevorzugt von haftend miteinander verbundenen Partikeln aus Gummi, vorzugsweise durch Recycling gewonnenem Gummischrot, gebildet, der beispielsweise aus Altreifen als Ausgangsmaterial gewonnen wird.

Die trittschalldämmende Profilbahn wird dabei zweckmäßig so ausgebildet, dass zwischen den miteinander verbundenen Partikeln unverbundene spaltförmige oder offenporige Bereiche verbleiben, wodurch der Belag gas- und/oder wasserdampfdurchlässig ausgebildet ist. Dadurch kann die erfindungsgemäße Trägerbahn auf noch nicht vollständig ausgetrocknetem Estrich oder Beton verlegt werden.

In bevorzugter Ausgestaltung der Erfindung ist die Ausgestaltung dabei so getroffen, dass die Vorsprünge als seitlich voneinander beabstandete parallele, zwischen sich parallel verlaufende Kanäle bildende leistenförmige Vorsprünge mit zu den Bodenflächen der Kanäle höhenversetzten, ebenfalls im wesentlichen ebenflächigen streifenförmigen Trägerflächen für das armierende Gittergewebe ausgebildet sind.

Die trittschalldämmende Profilbahn kann dann zusätzlich in im Vergleich zum Abstand der parallelen Kanäle voneinander größeren Abständen rechtwinklig zu den parallelen Kanälen verlaufende eingeformte Querkanäle aufweisen, wodurch das Aufrollen von längeren Profilbahnen zu Rollen erleichtert wird.

Alternativ kann die Ausgestaltung auch so getroffen sein, dass die von der Flachseite der Profilbahn vortretenden Vorsprünge von voneinander beabstandeten Einzelvorsprüngen gleicher Höhe in regelmäßiger oder unregelmäßiger Anordnung mit im wesentlichen ebenflächigen Endflächen als Trägerflächen für das armierende Gittergewebe ausgebildet sind.

Bei Plattenbelägen im Außenbereich, die Niederschlägen ausgesetzt sind, ist das Eindringen von Feuchtigkeit in die Profilbahn unerwünscht. Dann kann eine Weiterbildung von Vorteil sein, bei welcher die Profilbahn auf ihrer gittergewebeseitigen Oberfläche mit einer Kunststofffolie belegt ist, welche das Eindringen von Oberflächenwasser in die trittschalldämmende Profilbahn verhindert.

Die Kunststofffolie kann dabei aus einem eigensteifen, komplementär zur Oberseite der trittschalldämmenden Profilbahn profilierten Bahnmaterial bestehen, welches haftend auf der Profilbahn aufgebracht ist.

Auch in der gitterabgewandten Unterseite der Profilbahn können parallel und/oder rechtwinklig zu den in der Oberseite eingeformten Kanälen verlaufende Kanäle eingeformt sein, die insbesondere dann von Vorteil sind, wenn die erfindungsgemäße Trägerbahn durch Aufbringen eines abbindenden oder aushärtenden Klebers oder Mörtels auf dem Untergrund haftend aufgebracht wird. In die unterseitig eingeformten Kanäle vortretender abgebundener oder ausgehärteter Kleber oder Mörtel stellt dann eine zusätzliche Verkrallung mit dem Untergrund in dem Sinne sicher, dass eine Verschiebung der Profilbahn auf dem Untergrund mit Sicherheit ausgeschlossen ist.

Anstelle von in der Unterseite der Profilbahn eingeformten Kanälen kann auch eine Abwandlung von Vorteil sein, bei welcher auf der gitterabgewandten unteren Flachseite der Profilbahn ebenfalls eine Vielzahl von vortretenden Vorsprüngen gleicher Höhe vorgesehen ist.

Die Anordnung dieser von der Unterseite vortretenden Vorsprüngen wird dann im Wesentlichen gleich der Anordnung der von der oberen Flachseite der Profilbahn vortretenden Vorsprünge gewählt. Auf den freien Endflächen der von der unteren Flachseite der Profilbahn vortretenden Vorsprüngen kann dann ebenfalls ein Gittergewebe fest haftend aufgebracht sein, welches die Verankerung einer in noch nicht abgebundenem Estrich aufgebrachten Trägerbahn verbessert und den Estrich armiert, d.h. einer Rissbildung im abgebundenen Estrich entgegenwirkt.

Die trittschalldämmende von miteinander verbundenen elastomeren Partikeln gebildete Profilbahn kann auf ihrer, dem Untergrund abgewandten, mit einer Kunststofffolie belegten Oberseite auch ebenflächig ausgebildet sein, wobei die Kunststofffolie dann eine aus eigensteifem profiliertem Kunststoffmaterial hergestellte Kunststoff-Profilbahn ist, auf deren der ebenflächigen Profilbahn abgewandten Oberseite das Gittergewebe vorgesehen ist.

Dabei ist es dann zweckmäßig, die Kunststoff-Profilbahn haftend auf der untergrundabgewandten Oberseite der ebenflächigen trittschalldämmenden Profilbahn anzuordnen, wobei andererseits aber auch ein einfaches nicht haftendes Auflegen der Kunststoff-Profilbahn auf der trittschalldämmenden Profilbahn möglich ist.

Die aus eigensteifem profiliertem Kunststoffmaterial hergestellte Kunststoff-Profilbahn kann in vorteilhafter Weiterbildung der Erfindung mit einer Vielzahl von durchgehenden Öffnungen versehen sein, über welche ein Gas- bzw. Wasserdampf-Austausch möglich ist.

Die Erfindung ist in der folgenden Beschreibung in Verbindung mit der Zeichnung näher erläutert und zwar zeigt:
- Fig. 1: eine perspektivische Ansicht eines Abschnitts eines ersten Ausführungsbeispiels einer erfindungsgemäßen Trägerbahn ohne das normalerweise fest haftend auf ihrer Oberseite vorgesehene Gittergewebe, von dem aber ein Abschnitt oberhalb der Profilbahn angedeutet ist;
- Fig. 2: eine Schnittansicht durch die Trägerbahn, gesehen in Richtung der Pfeile 2-2 in Figur 1 mit dem auf der Profilbahn auflaminierten Gittergewebe;
- Fig. 3: eine Draufsicht auf einen Abschnitt der für die erfindungsgemäße Trägerbahn verwendeten Profilbahn, welche zusätzlich zu den voneinander beabstandeten parallelen Kanälen in größeren Abständen mit rechtwinklig hierzu verlaufenden Querkanälen versehen ist, von denen in der Figur lediglich ein Querkanal dargestellt ist;
- Fig. 4: eine Schnittansicht durch einen, unter Verwendung einer erfindungsgemäßen Trägbahn trittschalldämmend auf einer Betondecke verlegten Fliesenbelag;
- Fig. 5: eine der Fig. 2 entsprechende Schnittansicht durch ein zweites Ausführungsbeispiel der erfindungsgemäßen Trägerbahn;
- Fig. 6: eine in der Schnittführung ebenfalls der Fig. 2 entsprechende Schnittansicht durch ein drittes Ausführungsbeispiel einer erfindungsgemäßen Trägerbahn;
- Fig. 7: eine perspektivische Ansicht eines Abschnitts eines dritten Ausführungsbeispiels einer erfindungsgemäßen Trägerbahn, ohne das normalerweise fest haftend auf ihrer Oberseite vorgesehene Gittergewebe, von dem aber ein Abschnitt oberhalb der Profilbahn angedeutet ist;
- Fig. 8: eine Schnittansicht durch die Trägerbahn, gesehen in Richtung der Pfeile 8-8 in Figur 7 mit dem auf der Profilbahn auflaminierten Gittergewebe;
- Fig. 9: eine Draufsicht auf einen Abschnitt der für die in Figur 7 und 8 dargestellte Trägerbahn verwendetenn Profilbahn; und
- Fig. 10: eine in der Schnittführung ebenfalls der Figur 2 entsprechende Schnittansicht durch ein viertes Ausführungsbeispiel einer erfindungsgemäßen Trägerbahn, welches eine Abwandlung des dritten Ausführungsbeispiels gemäß Figur 6 darstellt.

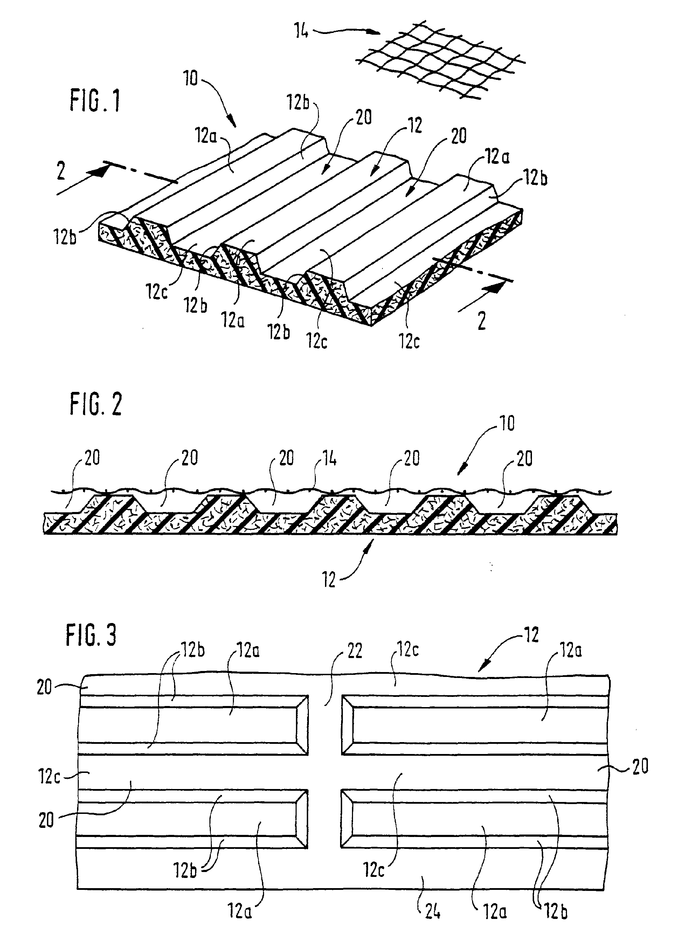

In den Figuren 1 und 2 ist eine in der erfindungsgemäßen Weise ausgebildete, in ihrer Gesamtheit mit 10 bezeichnete Trägerbahn dargestellt, welche eine trittschalldämmende Profilbahn 12 aufweist, auf deren Oberseite eine - in Figur 1 oberhalb der Profilbahn 12 dargestellte - Abdeckung 14 aus einem hochfesten Glasgittergewebe haftend aufgebracht ist. Die trittschalldämmende Profilbahn 12 besteht aus miteinander verbundenen Partikeln aus elastomerem Material, beispielsweise durch Recycling aus Altreifen von Kraftfahrzeugen gewonnenen Gummischrotpartikeln, die dann so miteinander verpresst und verbunden sind, dass der Belag Poren und Spalten aufweist, in welche sowohl aus dem Untergrund als auch von der Oberseite zutretende Feuchtigkeit oder Wasserdampf aufgenommen und abgegeben werden kann. Durch die elastischen Eigenschaften der Profilbahn 12 wird auch eine sehr gute Schalldämmung von oberhalb der Trägerbahn 10 entstehenden Geräuschen zur Unterseite hin erhalten.

Die Profilbahn 12 weist in dichtem Abstand parallel verlaufende, zur Oberseite offene Kanäle 20 auf. D.h. die Oberseite der Profilbahn wird also von parallel zueinander verlaufenden, seitlichen höhenversetzten, streifenförmigen Abschnitten 12a und 12b gebildet, welche jeweils über streifenförmige Abschnitte 12b verbunden sind. Der Boden der Kanäle 20 wird also von den streifenförmigen Abschnitten 12c gebildet, an welche beidseitig jeweils ein die Seitenwände der Kanäle bildender Abschnitt 12b anschließt. Das Gittergewebe 12 ist auf den die streifenförmigen Abschnitte 12b benachbarter Kanäle 20 verbindenden streifenförmigen Abschnitten 12a haftend aufgebracht.

In der in Figur 3 dargestellten Draufsicht ist erkennbar, dass die Kanäle 20 durch in größeren Abständen vorgesehene, rechtwinklig zu ihnen verlaufende Kanäle 22 unterbrochen sein können. Im Bereich der Querkanäle 22 ist die Trägerbahn dann relativ biegeweich, so dass sie bei großen Bahnlängen aufgerollt werden kann.

Der in Figur 3 unten liegende ebenflächige Randbereich 24 kann bei der Verlegung mit dem in gleicher Weise ebenflächig ausgebildeten, jedoch höhenversetzten oberen Randbereich einer nächstfolgenden Trägerbahn 10 in Übereinanderlage gebracht werden, so dass also ein Durchtritt von auf die Oberseite der verlegten Trägerbahn aufgebrachtem Klebemörtel für Fliesen zur Unterseite nicht zu befürchten ist. Alternativ können benachbarte Trägerbahnen 10 auch ohne Überlappung in Anlage ihrer - dann nicht höhenversetzten - Ränder verlegt werden. Die bei einer derartigen Verlegung entstehende Stoßfuge wird dann zweckmäßig durch ein aufgelegtes oder aufgeklebtes Band abgedeckt.

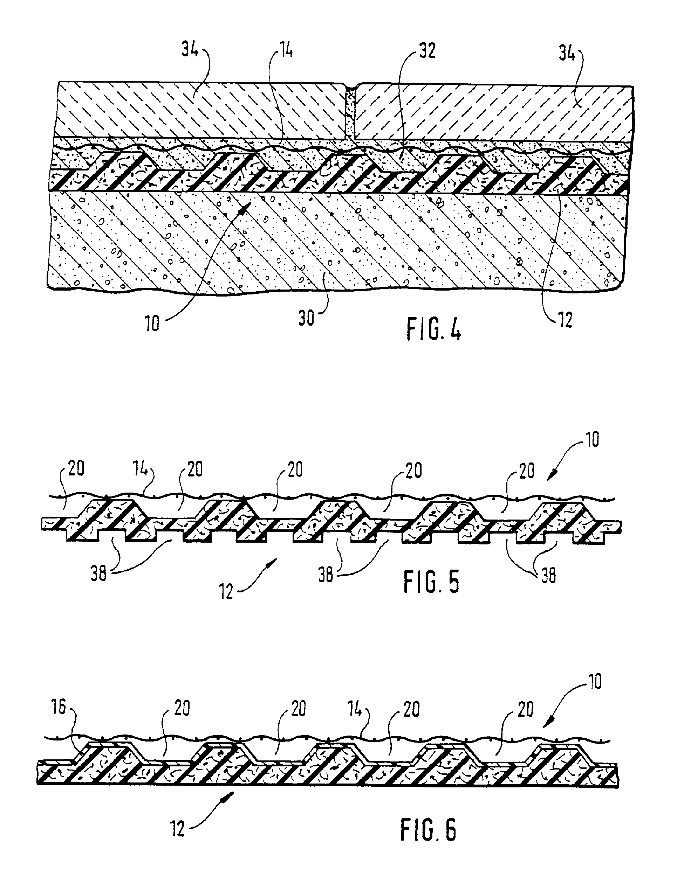

In Fig. 4 ist die Verwendung der Trägerbahn 10 als schalldämmende Zwischenlage zwischen der Oberseite einer - z.B. eine Zwischendecke eines mehrgeschossigen Wohnhauses bildenden - Betonplatte 30 und einer mittels einer Schicht 32 eines Dünnbett-Klebemörtels auf der Trägerbahn 10 aufgebrachten Bodenbelags aus keramischen Fliesen 34 gezeigt. Es ist ersichtlich, dass die schalldämmende Profilbahn 12 die mittels der Klebemörtel-Schicht 32 auf der Trägerbahn 10 fixierten Fliesen 34 akustisch von der Betonplatte 30 entkoppelt. Des weiteren ist erkennbar, dass das in der Klebemörtel-Schicht 32 eingebettete hochfeste Gittergewebe 14 aus Glasfasern die abgebundene bzw. ausgehärtete Mörtelschicht 32 armiert und so eine Rissbildung im Mörtel und daraus folgend in den auf ihm fixierten Fliesen 34 verhindert.

In Fig. 5 ist ein abgewandeltes Ausführungsbeispiel der Trägerbahn 10 dargestellt, die sich von der vorstehend in Verbindung mit den Fig. 1 bis 3 beschriebenen Trägerbahn nur dadurch unterscheidet, dass in der Unterseite der Profilbahn 12 ebenfalls parallele Kanäle 38 eingeformt sind, die allerdings geringere Tiefe und Breite als die oben offen mündenden Kanäle 20 haben.

Diese Kanäle 38 sind dann zweckmäßig und von Vorteil, wenn die Trägerbahn mit dem Untergrund, z.B. eine Beton-Tragplatte 30 (Fig. 4), durch Verkleben haftend verbunden werden soll. Dabei wird in der Regel so verfahren, dass zunächst der Kleber oder Mörtel in noch bildsamen Zustand auf der Oberfläche des Untergrunds aufgespachtelt und dann die Trägerbahn in der bestimmungsgemäßen Ausrichtung aufgelegt und angedrückt wird. Dabei wird ein Teil des noch nicht abgebundenen oder ausgehärteten Klebers bzw. Mörtels in die Kanäle 38 verdrängt. Nach dem Erstarren bildet der verdrängte Kleber dann streifenförmige rippenartige Vorsprünge, welche eine insbesondere gegen Verschiebungen der Profilbahn 12 auf der Oberseite des Untergrunds verhindernde zusätzliche formschlüssige Verkrallung bewirken.

Das in Fig. 6 gezeigte Ausführungsbeispiel der erfindungsgemäßen Trägerbahn 10 entspricht der in Verbindung mit den Fig. 1 bis 3 beschriebenen Trägerbahn grundsätzlich, wobei aber auf der Oberseite der Profilbahn 12 zusätzlich eine Kunststofffolie 16 aufgebracht ist, welche also das Eindringen von von der Oberfläche zutretendem Niederschlagswasser in die Profilbahn 12 verhindert. Die Kunststofffolie 16 kann aus einer eigensteifen, ursprünglich ebenflächigen Kunststofffolienbahn hergestellt sein, welche entsprechend der Oberfläche der Profilbahn 12 profiliert und mit der Oberfläche der Profilbahn 12 verbunden ist. Das Glasgittergewebe 14 ist in diesem Falle dann auf der Kunststofffolie 16 auflaminiert.

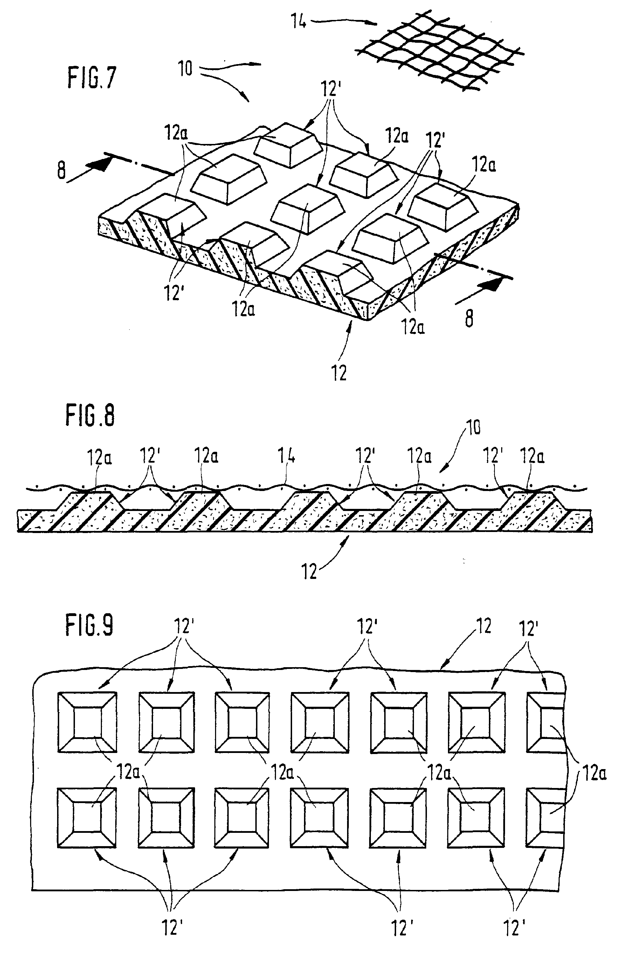

In den Figuren 7 bis 9 ist schließlich noch ein Ausführungsbeispiel einer erfindungsgemäßen Trägerbahn 10 gezeigt, welches sich von dem in Verbindung mit den Figuren 1 und 2 beschriebenen Ausführungsbeispiel dadurch unterscheidet, dass anstelle der die Kanäle 20 bildenden parallelen durchgehenden leistenförmigen Vorsprünge eine Vielzahl von in regelmäßiger Anordnung von der oberen Flachseite der Profilbahn 12 vortretenden Einzelvorsprünge 12' vorgesehen ist, die im dargestellten Fall jeweils die Form eines Pyramidenstumpfs mit ebenflächiger Endfläche 12a haben. Dieses Ausführungsbeispiel der erfindungsgemäßen Trägerbahn 10 kann also als eine Weiterbildung der Ausführungsbeispiele gemäß den Figuren 1 bis 4 angesehen werden, bei welcher die Anzahl der in Verbindung mit Figur 3 beschriebenen Querkanäle 22 soweit erhöht wurde, dass die Einzelvorsprünge 12' entstanden sind.

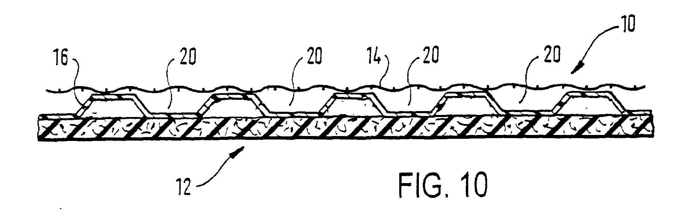

Figur 10 zeigt schließlich noch ein Ausführungsbeispiel einer erfindungsgemäßen Trägerbahn 10, die sich von dem in Figur 6 gezeigten Ausführungsbeispiel dadurch unterscheidet, dass die aus trittschalldämmenden, miteinander verbundenen elastomeren Partikeln gebildete Profilbahn 12 an ihrer Oberseite ebenflächig ausgebildet ist, während die auf dieser Oberseite aufgebrachte Kunststofffolie eine aus einem eigensteifen profilierten Kunststoffmaterial hergestellte Kunststoff-Profilbahn 16 ist, auf deren Oberseite wiederum das Gittergewebe 14 vorgesehen ist. Zwischen der ebenflächigen Oberseite der Profilbahn 12 und den nach oben vortretenden Profilierungen der Kunststoff-Folienbahn 16 sind also freie Räume gebildet, die nicht von trittschalldämmenden, aus elastomeren Partikeln gebildeten Material gefüllt sind. Um die Gas- bzw. Wasserdampfdurchlässigkeit zu gewährleisten, ist die Kunststoff-Profilbahn 16 deshalb zweckmäßig mit - nicht gezeigten - Durchgangsöffnungen versehen.

Es ist ersichtlich, dass im Rahmen des Erfindungsgedankens Abwandlungen und Weiterbildungen der beschriebenen Ausführungsbeispiele verwirklichbar sind. So können anstelle der in der Unterseite der Profilbahn 12 gemäß Figur 5 eingeformten parallelen Kanäle 38 auch von der Unterseite vortretende Einzelvorsprünge vorgesehen sein, die in ihrer Form und Anordnung den Einzelvorsprüngen 12' des Ausführungsbeispiels gemäß den Figuren 7 bis 9 entsprechen. Auf diesen von der Unterseite vortretenden Vorsprüngen kann dann noch zusätzlich ein dem Gittergewebe 14 entsprechendes Gittergewebe fest haftend aufgebracht sein, welches die Verankerung der Trägerbahn in einem darunter liegenden Estrich ermöglicht.

Die Form und Anordnung der Einzelvorsprünge 12' kann ebenfalls abgewandelt werden. Anstelle der im Ausführungsbeispiel gemäß den Figuren 7 bis 9 dargestellten Pyramidenstumpf-Form können die Einzelvorsprünge auch eine kegelstumpfförmige, polygonal oder elliptisch begrenzte Form haben, wobei in ihren freien Endbereichen zweckmäßig jeweils eine ebenfläche Trägerfläche für das Gittergewebe 14 ausgebildet ist.

Bei dem in Figur 10 veranschaulichten Ausführungsbeispiel kann es auch von Vorteil sein, wenn die aus miteinander verbundenen elastomeren Partikeln gebildete trittschalldämmende Profilbahn 12 entlang wenigstens eines Rands noch seitlich über die Kunststoff-Profilbahn 16 vortritt, so dass beim Verlegen dieser Trägerbahn der überstehende Teil der trittschalldämmenden Profilbahn seitlich hochgeklappt werden kann und somit eine Trittschalldämmung zu einer anschließenden senkrechten Wand bewirkt.

## Patentansprüche

1. Trägerbahn (10) für auf festen Untergründen zu verlegende Bodenbeläge, insbesondere Plattenbeläge, wie keramische Fliesen etc., bestehend aus einer durchgehenden, im wesentlichen beidseitig ebenflächigen Profilbahn (12), von deren wenigstens einer Flachseite eine Vielzahl von voneinander beabstandeten Vorsprüngen gleicher Höhe vortreten, deren trägerbahnabgewandte freie Endflächen ein den Mörtel oder Kleber für die Fixierung des zu verlegenden Bodenbelags auf der Trägerbahn (10) armierendes Gittergewebe (14) tragen,
**dadurch gekennzeichnet,**
**dass** die Profilbahn (12) von haftend miteinander verbundenen Partikeln aus elastomere Eigenschaften aufweisendem, trittschalldämmendem Material gebildet wird.

2. Trägerbahn nach Anspruch 1, **dadurch gekennzeichnet, dass** die trittschalldämmende Profilbahn (12) von haftend miteinander verbundenen Partikeln aus Gummi, vorzugsweise durch Recycling gewonnenem Gummischrot gebildet wird.

3. Trägerbahn nach Anspruch 1 oder 2, **dadurch gekennzeichnet, dass** die trittschalldämmende Profilbahn (12) durch zwischen den miteinander verbundenen Partikeln verbleibende unverbundene Bereiche gebildete Spalt gas- und/oder wasserdampfdurchlässig ausgebildet ist.

4. Trägerbahn nach einem der Ansprüche 1 bis 3, **dadurch gekennzeichnet, dass** die Vorsprünge als seitlich voneinander beabstandete paralelle, zwischen sich parallel verlaufende Kanäle (20) bildende leistenförmige Vorsprünge mit zu den Bodenflächen (12a) der Kanäle (20) höhenversetzten, ebenfalls im wesentlichen streifenförmigen Trägerflächen (12a) für das armierende Gittergewebe (14) ausgebildet sind.

5. Trägerbahn nach einem der Ansprüche 1 bis 4, **dadurch gekennzeichnet, dass** die trittschalldämmende Profilbahn (12) in im Vergleich zum Abstand der parallelen Kanäle (20) voneinander größeren Abständen rechtwinklig zu den parallelen Kanälen (20) verlaufende eingeformte Querkanäle (22) aufweist.

6. Trägerbahn nach einem der Ansprüche 1 bis 3, **dadurch gekennzeichnet, dass** die von der Flachseite der Profilbahn (12) vortretenden Vorsprünge von voneinander beabstandeten Einzelvorsprüngen (12') gleicher Höhe in regelmäßiger oder unregelmäßiger Anordnung mit im wesentlichen ebenflächigen Endflächen als Trägerflächen (12a) für das armierende Gittergewebe (14) ausgebildet sind.

7. Trägerbahn nach einem der Ansprüche 1 bis 6, **dadurch gekennzeichnet, dass** die Profilbahn (12) auf ihrer gittergewebeseitigen Oberfläche mit einer Kunststofffolie (16) belegt ist.

8. Trägerbahn nach Anspruch 7, **dadurch gekennzeichnet, dass** die Kunststofffolie (16) aus eigensteifem komplementär zur Oberseite der trittschalldämmenden Profilbahn (12) profilierten Bahnmaterial besteht und haftend auf der Profilbahn (12) aufgebracht ist.

9. Trägerbahn nach einem der Ansprüche 1 bis 8, **dadurch gekennzeichnet, dass** in der gittergewebeabgewandten Unterseite der Profilbahn (12) parallel und/oder rechtwinklig zu den in die Oberseite eingeformten Kanälen (20) verlaufende Kanäle (38) eingeformt sind.

10. Trägerbahn nach einem der Ansprüche 1 bis 8, **dadurch gekennzeichnet, dass** auf der gittergewebeabgewandten unteren Flachseite der Profilbahn (12) ebenfalls eine Vielzahl von vortretenden Vorsprüngen gleicher Höhe vorgesehen ist.

11. Trägerbahn nach Anspruch 10, **dadurch gekennzeichnet, dass** die Anordnung der von der unteren Flachseite der Profilbahn (12) vortretenden Vorsprünge im wesentlichen der Anordnung der von der oberen Flachseite der Profilbahn (12) vortretenden Vorsprünge (12') entspricht.

12. Trägerbahn nach Anspruch 11, **dadurch gekennzeichnet, dass** auf den freien Endflächen der von der unteren Flachseite der Profilbahn (12) vortretenden Vorsprünge ebenfalls ein Gittergewebe fest haftend aufgebracht ist.

13. Trägerbahn nach Anspruch 7, **dadurch gekennzeichnet, dass** die trittschalldämmende Profilbahn (12) auf ihrer, dem Untergrund abgewandten Oberseite ebenflächig ausgebildet ist, und dass die Kunststofffolie eine aus eigensteifem profilierte Kunststoffmaterial hergestellte Kunststoff-Profilbahn (16) ist, auf deren der ebenflächigen Profilbahn (12) abgewandten Oberseite das Gittergewebe (14) vorgesehen ist.

14. Trägerbahn nach Anspruch 13, **dadurch gekennzeichnet, dass** die Kunststoff-Profilbahn (16) haftend auf der ebenflächigen Oberseite der trittschalldämmenden Profilbahn (12) aufgebracht ist.

15. Trägerbahn nach Anspruch 13 oder 14, **dadurch gekennzeichnet, dass** die Kunststoff-Profilbahn (16) mit einer Vielzahl von durchgehenden Öffnungen versehen ist.
